# EUROPEAN PATENT APPLICATION

(11) **EP 3 989 028 A1**
(43) Date of publication of application: **27.04.2022**
(21) Application number: 20831082.1
(22) Date of filing: 19.06.2020
(51) Int. Cl.: G05D 1/02, G08G 1/00, E01F 9/30

(54) **MAGNETIC MARKER AND METHOD FOR USING MAGNETIC MARKER**

(30) Priority: 24.06.2019 JP 2019116765
(71) Applicant: Aichi Steel Corporation, Tokai-shi, Aichi 476-8666 (JP)
(72) Inventor: YAMAMOTO, Michiharu, Tokai-shi, Aichi 476-8666 (JP)
(74) Representative: Viering, Jentschura & Partner mbB Patent- und Rechtsanwälte
(86) International application number: PCT/JP2020/024093
(87) International publication number: WO 2020/262220

(57) **Abstract**

A magnetic marker (1) to be laid on a traveling road where a vehicle travels includes a circular sheet-shaped magnet sheet (10), which is a magnet as a magnetism generation source, having a diameter of 100 mm, and a reflective sheet (15) forming a reflecting part which retroreflects laser light from a lidar unit mounted on the vehicle and is laminated on a surface of magnet sheet (10). Since the magnetic marker is detectable not only magnetically by a magnetic sensor but also by a lidar unit using laser light, the magnetic marker is easily detected compared with a general magnetic marker that is detectable only magnetically.

## Description

### TECHNICAL FIELD

The present invention relates to a magnetic marker to be laid in or on a road and a method of using the magnetic marker.

### BACKGROUND ART

Conventionally, a magnetic marker to be laid in or on a road so as to be detectable by a vehicle has been known (for example, refer to Patent Literature 1). The magnetic marker is detectable by using a magnetic sensor mounted on the vehicle. For example, by using the magnetic markers laid along lane, it is possible to achieve automatic driving, as well as various driving assists such as automatic steering control and lane departure warning.

The acting range of magnetism occurring from the magnetic marker is not so wide. Thus, it is extremely difficult for a vehicle positioned before a laying position of the magnetic marker to detect the magnetic marker. In view of the detection performance of the magnetic sensor that is vehicle-mountable, the magnetic marker is not detectable until the vehicle arrives at the laying position of the magnetic marker.

### CITATION LIST

### PATENT LITERATURE

Patent Literature 1: Japanese Unexamined Patent Application Publication No. 2005-202478

### SUMMARY OF INVENTION

### TECHNICAL PROBLEM

To reliably detect the magnetic marker when the vehicle passes over the magnetic marker, high detection performance is required on a vehicle side. In general, if reliable detection with low loss is tried to be achieved, there is a possibility of an increase in erroneous detection of magnetic markers due to disturbance magnetism and so forth.

The present invention was made in view of the above-described conventional problem, and is to provide an easily-detectable magnetic marker.

### SOLUTION TO PROBLEM

One mode of the present invention resides in a magnetic marker to be laid on a traveling road where a vehicle travels, including:
a magnet as a magnetism generation source and a reflecting part which retroreflects at least part of incident electromagnetic waves.

One mode of the present invention resides in a method of detecting and using, by a traveling vehicle, a magnetic marker including a magnet as a magnetism generation source and a reflecting part which retroreflects at least part of incident electromagnetic waves and laid in or on a traveling road of the vehicle, wherein
the vehicle includes a distance-measurement device which acquires an azimuth and a distance of a subject based on a direction of emitting the electromagnetic waves and a time required for reflection of the electromagnetic waves, a magnetic device which detects the magnetic marker and identifies a lateral shift amount of the vehicle with respect to the magnetic marker, and a processing circuit which calculates a target steering angle for the vehicle to travel along a target path and controls the vehicle so that the vehicle travels along the target path,
the method includes:
   a process of detecting the magnetic marker by emitting the electromagnetic waves ahead of the vehicle, and measuring an azimuth and a distance of the magnetic marker;
   a process of estimating a predicted arrival time point when the vehicle arrives at the magnetic marker detected by using the electromagnetic waves or a predicted lateral shift amount, which is a deviation (lateral shift amount) of the vehicle in a vehicle-width direction predicted for the magnetic marker; and
   a process of identifying an actual detection time point, which is a time point when the magnetic marker is actually detected, or an actual deviation (lateral shift amount) of the vehicle with respect to the magnetic marker, and
   the method performs an accuracy improvement process in which, of a result of comparison between the actual detection time point and the predicted arrival time point and a result of comparison between the actual deviation (lateral shift amount) and the predicted lateral shift amount, at least either one of the results is used to achieve an improvement in at least any of: measurement accuracy by the distance-measurement device, accuracy of detection of the magnetic marker by the magnetic device, accuracy of the target steering angle calculated by the processing circuit, and following accuracy of the vehicle with respect to the target path.

### Advantageous Effects of Invention

The magnetic marker according to the present invention includes the reflecting part which retroreflects at least part of incident electromagnetic waves. This magnetic marker is detectable not only magnetically but also by using electromagnetic waves. For example, electromagnetic waves such as light and electric waves have high rectilinearity and can arrive at a point relatively far away. By using electromagnetic waves, the magnetic marker can be detected before the vehicle arrives at the laying position of the magnetic marker.

AS for the magnetic marker according to the present invention that is detectable not only magnetically but also by using electromagnetic waves, of the result of comparison between the actual detection time point and the predicted arrival time point and the result of comparison between the actual deviation (lateral shift amount) and the predicted lateral shift amount, at least either one of the results can be used. This comparison result can be used for the accuracy improvement process to achieve an improvement in at least any of: measurement accuracy by the distance-measurement device, accuracy of detection of the magnetic marker by the magnetic device, accuracy of the target steering angle calculated by the processing circuit, and following accuracy of the vehicle with respect to the target path.

As described above, the magnetic marker according to the present invention is detectable not only magnetically but also by using electromagnetic waves, and the degree of difficulty in detection is decreased. Also, in accordance with the magnetic marker according to the present invention, the result of comparison between the magnetic detection result and the detection result using electromagnetic waves can be acquired. This comparison result can be used to improve at least any of: measurement accuracy by the distance-measurement device, accuracy of detection of the magnetic marker by the magnetic device, accuracy of the target steering angle calculated by the processing circuit, and following accuracy of the vehicle with respect to the target path.

### BRIEF DESCRIPTION OF DRAWINGS

FIG. 1 is a diagram depicting a magnetic marker in a first embodiment.
FIG. 2 is a descriptive diagram depicting a combination of a lane where the magnetic markers are laid and a vehicle in the first embodiment.
FIG. 3 is block diagram depicting electrical configuration of a system on a vehicle side to achieve a lane keeping function in the first embodiment.
FIG. 4 is a descriptive diagram exemplarily depicting temporal changes in (magnetic measurement value in forwarding direction) in the first embodiment.
FIG. 5 is a descriptive diagram exemplarily depicting a distribution of (magnetic measurement values in vehicle-width direction) in the vehicle-width direction in the first embodiment.
FIG. 6 is a flow diagram depicting a flow of magnetic detection process in the first embodiment.
FIG. 7 is a flow diagram depicting a flow of distance-measurement process by a lidar unit in the first embodiment.
FIG. 8 is a descriptive diagram of laser-light beam scanning in a distance-measurement area in the first embodiment.
FIG. 9 is a flow diagram depicting a flow of lane keeping control in the first embodiment.
FIG. 10 is a descriptive diagram exemplarily depicting optically-detected magnetic markers and a target path in the first embodiment.
FIG. 11 is a diagram depicting another magnetic marker in the first embodiment.
FIG. 12 is a descriptive diagram of a magnetic marker in a second embodiment.
FIG. 13 is a descriptive diagram exemplarily depicting optically-detected magnetic markers and a target path in the second embodiment.
FIG. 14 is a diagram depicting a magnetic marker in a third embodiment.
FIG. 15 is a descriptive diagram depicting a procedure of fabricating a magnetic sheet for punching magnetic markers therein in the third embodiment.
FIG. 16 is a descriptive diagram of an execution period of magnetic detection process in a fourth embodiment.
FIG. 17 is a descriptive diagram of a predicted lateral shift amount in the fourth embodiment.

### DESCRIPTION OF EMBODIMENTS

Modes of the present invention are specifically described by using the following embodiments.

### (First Embodiment)

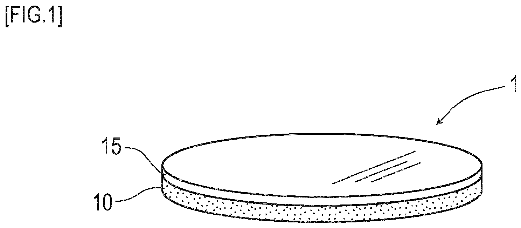

The present embodiment is an example regarding a magnetic marker laid in or on a road (one example of a traveling road where a vehicle travels) to achieve vehicle's driving assist. Details of this are described by using FIG. 1 to FIG. 11.

Magnetic marker 1 (FIG. 1) is configured by laminating reflective sheet 15 laminated on a surface of magnet sheet 10. Reflective sheet 15 forms one example of a reflecting part and a reflective layer exhibiting retroreflection characteristics. Magnetic marker 1 exhibits a flat circular shape having a diameter of 100 mm and a thickness of 2 mm. This magnetic marker 1, for example, can be adhesively bonded to a road surface. As an adhesive, for example, molten asphalt may be used.

Magnet sheet 10 is one example of a magnet as a magnetism generation source. Magnet sheet 10 of the present embodiment is a circular-shaped isotropic ferrite rubber magnet having a diameter of 100 mm and a thickness of 1.5 mm. The maximum energy product (BHmax) of this magnet sheet 10 is approximately 6.4 kJ/square m.

Reflective sheet 15 is a circular-shaped resin-made sheet having a diameter of 100 mm and a thickness of 0.5 mm. In this reflective sheet 15 forming one example of a small-piece-shaped sheet body, spherical glass beads having a diameter of several tens of µm to 100 µm and a high refractive index are dispersed and arranged inside. Reflective sheet 15 containing spherical glass beads has an optical characteristic of reflecting (retroreflecting) at least part of incident light toward an incident direction. In particular, in reflective sheet 15 of the present embodiment, the optical characteristic is adjusted so as to retroreflect laser light with high efficiency.

Magnetic marker 1 can be made by, for example, by laminating a large-sheet-shaped reflective member on a surface of a large-sheet-shaped isotropic ferrite rubber magnet to acquire an intermediate sheet (omitted in the drawing) and then punching a circular shape by punching. The outer periphery of magnetic marker 1 may be a section as it is at the time of punching. This is because, in general, a ferrite rubber magnet with iron oxide as a main material has a low possibility of being degraded by oxidation or the like and necessity of providing a protective layer or a coat layer on the section is small.

Note that in place of reflective sheet 15 of the present embodiment, a reflective layer as a coat layer with retroreflective coating having mixed therein spherical glass beans having a high refractive index may be formed on a surface of magnet sheet 10. For example, it may be such that, after a coat layer is provided on a surface of a large-sheet-shaped isotropic ferrite rubber magnet, a circular shape is punched by punching to make a magnetic marker. The magnetic marker may be fabricated by forming a coat layer with retroreflective coating on the surface of circular-shaped magnet sheet 10. Furthermore, in place of the coating, a resin material with spherical glass beads having a high refractive index dispersed therein may be adopted, and a coat layer with this resin material may be formed on a surface of magnet sheet 10. The resin material maybe, for example, a transparent resin material such as epoxy resin. After the resin material covering the surface of magnet sheet 10 is cured, a process of melting the surface of the resin material may be performed, thereby exposing the spherical glass beads to an outer surface. In place of the spherical glass beads forming particles, metal powder (pulverulent body) such as alumina may be adopted. In place of the resin material, a polymer material such as asphalt may be adopted.

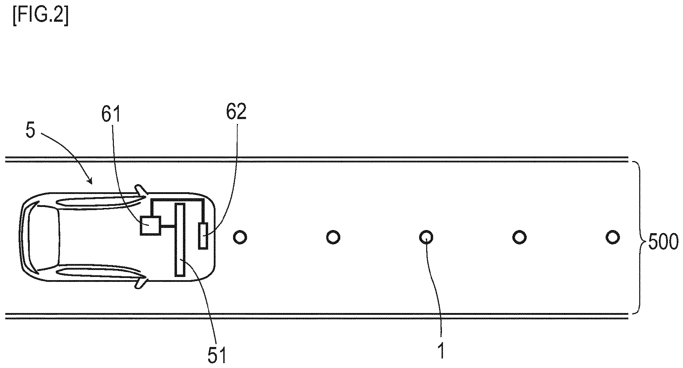

Magnetic markers 1 configured as described above are arranged, for example, as in FIG. 2, along the center of lane 500. For example, magnetic markers 1 arranged with pitches of, for example, 2 meters, can be used for various driving assists such as lane departure warning, lane keeping function, and automatic driving.

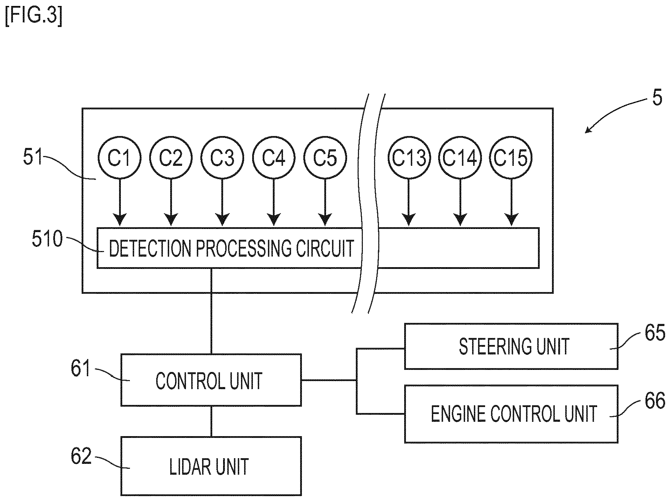

Vehicle 5 has, for example, a lane keeping function. This vehicle 5 includes, as in FIG. 3, in addition to control unit 61 for achieving the lane keeping function, sensor array 51 for magnetically detecting magnetic marker 1, lidar unit 62 for optically detecting magnetic marker 1, and so forth. Furthermore, vehicle 5 includes, as equipment for achieving semiautomatic traveling, steering unit 65 which adjusts a steering angle, engine control unit 66 for adjusting a vehicle speed, and so forth.

Next, sensor array 51 as one example of a magnetic device, lidar unit 62 as one example of a distance-measurement device, and control unit 61 as one example of a processing circuit are generally described.

### (Sensor Array)

Sensor array 51 is configured to include a plurality of magnetic sensors Cn (n is an integer of 1 to 15) and detection processing circuit 510 which processes magnetic measurement values of magnetic sensors Cn. Sensor array 51 is a rod-shaped unit where magnetic sensors C1 to C15 are arrayed on a straight line so as to be regularly spaced. Sensor array 51 is attached to vehicle 5 so that the longitudinal direction of the rod shape is along a vehicle-width direction.

As magnetic sensors Cn, for example, MI (Magneto Impedance) sensors can be used. MI sensors are magnetic sensors with high sensitivity by using the known MI effect (Magneto Impedance Effect) in which impedance of a magneto-sensitive body such as an amorphous wire sensitively changes in response to an external magnetic field. Magnetic sensors Cn have sensitivity in the longitudinal direction of the amorphous wire.

Magnetic sensor Cn of the present embodiment includes two amorphous wires along two orthogonal directions. Magnetic sensor Cn is configured so that the two amorphous wires are along a forwarding direction and the vehicle-width direction when sensor array 51 is attached to vehicle 5 as described above. Magnetic sensor Cn of sensor array 51 assembled to vehicle 5 can detect magnetic components acting in the forwarding direction and magnetic components acting in the vehicle-width direction of vehicle 5.

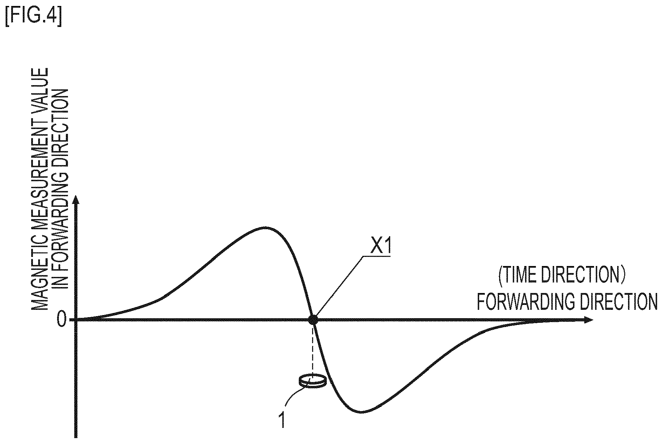

For example, when any magnetic sensor Cn moves in the forwarding direction to pass directly above magnetic marker 1, the magnetic measurement value in the forwarding direction has its sign reversed before and after passing magnetic marker 1 and changes so as to cross zero at a position directly above magnetic marker 1, as in a graph of changes over time exemplarily depicted in FIG. 4. Therefore, during traveling of vehicle 5, when zero-cross X1 occurs in which the sign of the magnetic measurement value in the forwarding direction detected by any magnetic sensor Cn is reversed, it can be determined that sensor array 51 is positioned directly above magnetic marker 1.

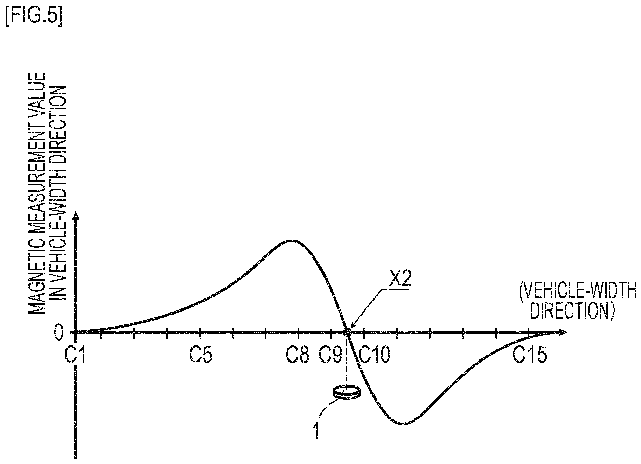

Also, for example, as for a magnetic sensor with the same specification as that of magnetic sensors Cn, a movement along a virtual line in the vehicle-width direction passing directly above magnetic marker 1 is assumed. The magnetic measurement value in the vehicle-width direction from this magnetic sensor has its sign reversed on both sides across magnetic marker 1 and changes so as to cross zero at a position directly above magnetic marker 1. In the case of sensor array 51 having fifteen magnetic sensors Cn arrayed in the vehicle-width direction, the sign of the magnetic measurement value in the vehicle-width direction to be detected by magnetic sensor Cn varies depending on which side the magnetic sensor is present with respect to magnetic marker 1, as in a magnetic distribution exemplarily depicted in FIG. 5.

That is, the position of zero-cross X2 in the magnetic distribution of FIG. 5 is a position directly above magnetic marker 1. For example, in the case of the drawing, the position of zero-cross X2 of C9.5, near a midpoint between magnetic sensors C9 and C10, is a position directly above magnetic marker 1 (hereinafter referred to as the position of magnetic marker 1). Here, in sensor array 51, the pitch between adjacent magnetic sensors Cn is 10 cm, and magnetic sensor C8 serves as the center of vehicle 5 in the vehicle-width direction. Therefore, in the case of FIG. 5, a position shifted rightward by (9.5-8)×10 cm=15 cm with respect to the center of vehicle 5 in the vehicle-width direction indicates the position of magnetic marker 1.

For example, when vehicle 5 travels leftward in the vehicle-width direction, magnetic marker 1 is shifted rightward with respect to sensor array 51 and, for example, as in FIG. 5, the position of zero-cross X2 has a positive value on the right side of magnetic sensor C8. When a lateral shift amount when vehicle 5 is shifted rightward is taken as being on a positive side and a lateral shift amount when it is shifted leftward is taken as being on a negative side, for example, in the case of FIG. 5, (-15) cm of the reversed sign of the above-described (9.5-8)×10 cm=15 cm indicating the position of magnetic marker 1 serves as the lateral shift amount of vehicle 5.

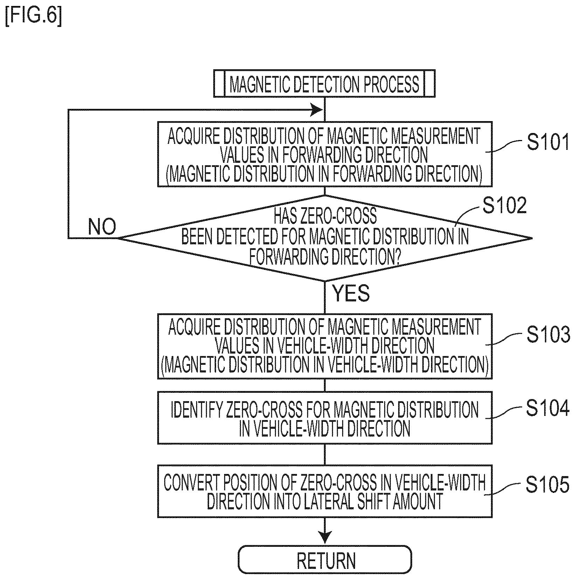

Here, details of process of magnetically detecting magnetic marker 1 are described with reference to FIG. 6.

Detection processing circuit 510 (FIG. 3) acquires magnetic measurement values of magnetic sensors Cn in the forwarding direction (S101). Then, for changes over time of the magnetic measurement values in the forwarding direction of at least any magnetic sensor Cn, detection processing circuit 510 tries to detect zero-cross corresponding to X1 of FIG. 4 (S102). Detection processing circuit 510 repeatedly acquires magnetic measurement values of magnetic sensors Cn in the forwarding direction (S101) until this zero-cross is detected (S102: NO) .

Regarding changes over time of the magnetic measurement values in the forwarding direction, if detecting zero-cross corresponding to X1 in changes over time of FIG. 4 (S102: YES), detection processing circuit 510 determines that sensor array 51 is positioned directly above magnetic marker 1. Note that as for determination as to detection of magnetic marker 1, in addition to detection of zero-cross corresponding to X1 of FIG. 4, a condition is preferably set in which a ratio in changes over time of magnetic measurement values in the forwarding direction, that is, the magnitude of a differentiation value (difference value) of the magnetic measurement values, is equal to or larger than a predetermined threshold value.

If detecting magnetic marker 1 in response to detection of zero-cross corresponding to X1 in the magnetic distribution of FIG. 4, detection processing circuit 510 acquires the magnetic distribution of FIG. 5 depicting a distribution of magnetic measurement values in the vehicle-width direction measured at the same timing by magnetic sensor Cn (S103).

Regarding the magnetic distribution of FIG. 5, which is the distribution of magnetic measurement values in the vehicle-width direction of magnetic sensor Cn, detection processing circuit 510 identifies the position of zero-cross in the vehicle-width direction corresponding to X2 (S104). Then, based on this position of zero-cross in the vehicle-width direction, a lateral shift amount of vehicle 5 in the vehicle-width direction with respect to magnetic marker 1 is identified (S105). Specifically, detection processing circuit 510 reverses the sign of the value indicating the position of zero-cross in the vehicle-width direction corresponding to X2 of FIG. 5 and takes the result as a lateral shift amount of vehicle 5 in the vehicle-width direction.

### (Lidar Unit)

Lidar unit 62 (FIG. 3) is a unit for sensing preceding vehicles and/or obstacles ahead. Lidar unit 62 optically senses preceding vehicles and/or obstacles ahead in a range of 150 meters ahead by using reflection of laser light. For example, to achieve an ACC (Adaptive Cruise Control) function, a collision reduction brake function, and so forth, lidar unit 62 is mounted on many vehicles 5. This lidar unit 62 can be used for optical detection of magnetic marker 1 (FIG. 1) including reflective sheet 15.

Lidar unit 62 includes a light source which performs pulse emission of laser light, a light-receiving part which receives reflected light from a subject, a time measuring part which measures elapsed time (reflection time) from light emission to light reception, and a distance calculating part which calculates a distance. Furthermore, lidar unit 62 includes an optical mechanism part which performs beam-scanning with laser light in a longitudinal direction and a lateral direction.

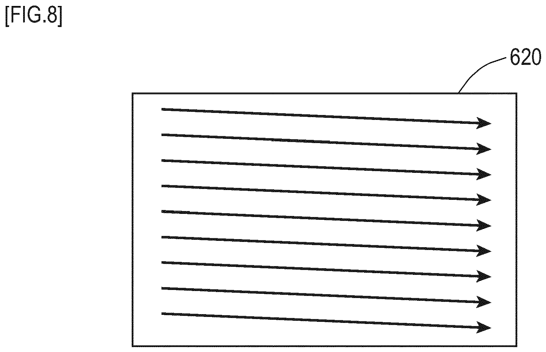

The optical mechanism part has, for example, a polygon mirror (multifaceted mirror) which reflects laser light for projection ahead, and a driving part which rotates the polygon mirror at high speeds. Laser light emitted from the light source is reflected by the polygon mirror to go ahead of vehicle 5. The light mechanism part physically changes the direction of laser light by the polygon mirror, thereby beam-scanning a two-dimensional area ahead serving as distance-measurement area 620 (FIG 8) with laser light.

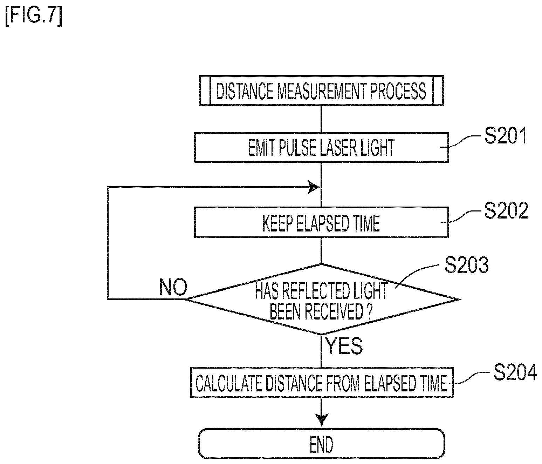

As depicted in a flow diagram of distance-measurement process of FIG. 7, after emitting pulse laser light (S201), lidar unit 62 measures elapsed time until receiving reflected light from a subject (S202, S203: NO→S202). Upon receiving reflected light (S203: YES), lidar unit 62 calculates a distance to the subject based on the elapsed time required from light emission to reflected-light reception (S204).

Lidar unit 62 controls a light-emitting part for repetitive pulse-light-emission of laser light. Also, lidar unit 62 rotates the polygon mirror in synchronization with pulse-light-emission of laser light to achieve beam-scanning with laser light. As with image scanning for use in image transmission in television or the like, lidar unit 62 beam-scans each row in a horizontal direction sequentially from top to bottom, thereby achieving beam-scanning of the entire two-dimensional area serving as distance-measurement area 620 as in FIG. 8.

By performing the distance-measurement process (FIG. 7) for each point during beam-scanning, lidar unit 62 generates a distance image with distance data linked to each point in distance-measurement area 620 ahead. The distance image represents a distance and azimuth to each point in distance-measurement area 620. A reflector disposed on a rear end face of vehicle 5 and reflective sheet 15 of magnetic marker 1 have retroreflection characteristics. Therefore, lidar unit 62 can receive reflected light from vehicle 5 and magnetic marker 1 with high reliability, and can identify the distance and azimuth to these subjects with high reliability.

### (Control Unit)

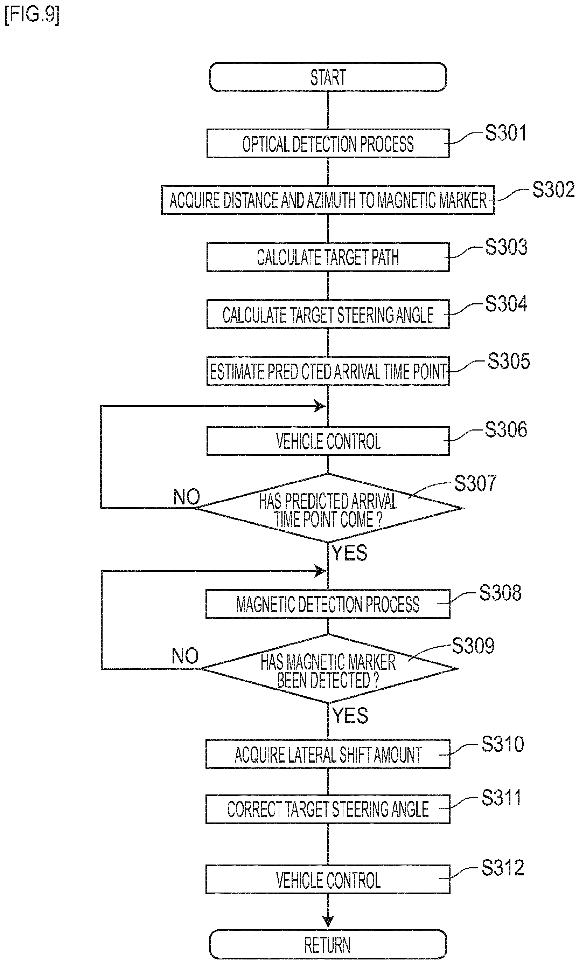

Control unit 61 (FIG. 3) controls lidar unit 62 and sensor array 51 so that they detect magnetic marker 1, and performs vehicle control for achieving lane keeping traveling. Details of this vehicle control by control unit 61 are described with reference to a flow diagram of FIG. 9. Note that in this flow diagram, details of vehicle-speed adjustment control for traveling by following as keeping an appropriate following distance with a preceding vehicle are omitted.

As in FIG. 9, control unit 61 first uses lidar unit 62 to perform optical detection process for magnetic marker 1 (S301) . Specifically, control unit 61 acquires a distance image by the distance-measurement process (FIG. 7) by lidar unit 62, and processes this distance image, thereby optically detecting magnetic marker 1 arranged ahead.

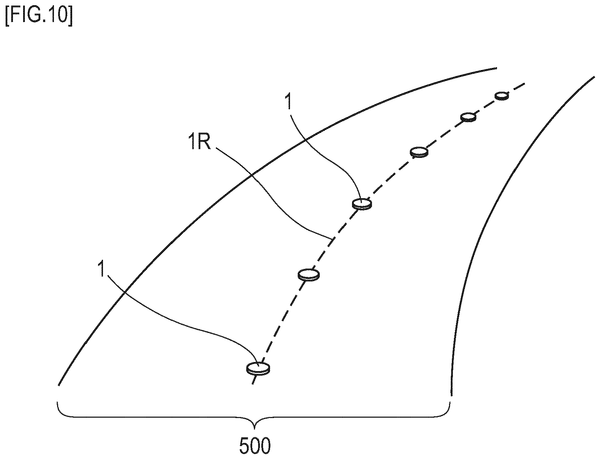

Control unit 61 refers to the distance image by lidar unit 62 and acquires a distance and azimuth to each detected magnetic marker 1 (S302, refer to FIG. 10). Then, based on the distances and azimuths of a plurality of magnetic markers 1 arrayed on lane 500 ahead, control unit 61 calculates a three-dimensional path passing over the plurality of magnetic markers 1, and sets the path as a target path 1R (refer to FIG. 10) (S303).

Control unit 61 calculates a target steering angle for traveling along target path 1R (S304), and estimates a time point of arriving at nearest magnetic marker 1 as a predicted arrival time point (S305). For example, when a current time is tr, a distance to nearest magnetic marker 1 is D, and a speed of vehicle 5 is V, predicted arrival time point to is tr+D/V.

Control unit 61 performs vehicle control for letting vehicle 5 travel along target path 1R by taking the target steering angle calculated at step S304 as a control value (S306). Then, control unit 61 performs vehicle control with the target steering angle calculated at step S304 (S306) until time arrives at predicted arrival time point to (S307: NO). By performing vehicle control at step S306 in this manner, control unit 61 tries to achieve vehicle traveling along target path 1R (FIG. 10).

When time arrives at predicted arrival time point to (S307: YES), control unit 61 tries to perform detection process for magnetically detecting magnetic marker 1 by using sensor array 51 (S308) . Control unit 61 repeatedly performs magnetic detection process (S308) until magnetic marker 1 is detected (S309: NO).

If magnetic marker 1 has been magnetically detected (S309: YES), control unit 61 acquires a lateral shift amount of vehicle 5 identified by sensor array 51 (S310) . Then, control unit 61 corrects the target steering angle so as to reduce the lateral shift amount of vehicle 5 with respect to magnetic marker 1 (S311) . Then, control unit 61 takes the corrected target steering angle as a control target value, and performs vehicle control (S312).

Note that for determination at step S309, a temporal limitation may be combined. For example, if a predetermined time has elapsed after the lapse of predicted arrival time point to, it may be determined that no magnetic marker 1 has been detected, and the process may directly proceed to step S312. In this case, the target steering angle is not corrected with the lateral shift amount, but vehicle control with the target steering angle calculated at step S304 can be performed.

As described above, magnetic marker 1 including reflective sheet 15 having retroreflection characteristics can be optically detected from a position before arrival at magnetic marker 1. If vehicle 5 includes lidar unit 62, it is possible to simultaneously detect a plurality of magnetic markers 1 ahead arrayed along lane 500 and set a path passing over these magnetic markers 1 as target path 1R. By setting target path 1R, smooth lane keeping traveling along lane 500 can be achieved. Furthermore, if magnetic marker 1 is magnetically detected when vehicle 5 passes over it, a lateral shift amount of vehicle 5 with respect to magnetic marker 1 can be identified with high accuracy. If the target steering angle is corrected with the lateral shift amount of vehicle 5, it is possible to adjust the vehicle position in the vehicle-width direction within lane 500.

Here, steering control of the wheel to be steered of the vehicle by the lateral shift amount at the time of passing over magnetic marker 1 is described as a comparative example. In this control of the comparative example, there is a possibility of occurrence of unsteady driving of the vehicle due to little-by-little steering control at each time of passage over magnetic marker 1. This unsteady driving of the vehicle is similar to, for example, unsteady driving that can occur due to driving by beginners who try to adjust the position of the vehicle within the lane (position in the vehicle-width direction) by viewing the vicinity. To reduce this unsteady driving of the vehicle, control gains can be set to be small. However, if control gains are small, there is a high possibility that control delay at the time of entering a curve zone poses a problem.

For example, a sufficiently experienced driver operates the steering wheel by capturing a road shape ahead as a whole, and thus can achieve smooth driving which follows the road shape. The control of the present embodiment of setting a target steering angle based on target path 1R and correcting the target steering angle with the lateral shift amount of vehicle 5 is similar to driving by an experienced driver. Setting a line passing over magnetic marker 1 ahead as target path 1R corresponds to a whole grasp of the road shape ahead. According to the control of the present embodiment of not directly controlling the steering angle with the lateral shift amount with respect to magnetic marker 1 but correcting the target steering angle with the lateral shift amount, unsteady driving of vehicle 5 can be reduced without causing control delay.

In the present embodiment, magnetic marker 1 including reflective sheet 15 which covers the entire surface of magnet sheet 10 is exemplarily described. Reflective sheet 15 may be a sheet which covers part of the surface of magnet sheet 10 or may be a sheet larger in size than magnet sheet 10. In the present embodiment, circular-shaped sheets are exemplarily described as magnet sheet 10 and reflective sheet 15. The shapes of magnet sheet 10 and reflective sheet 15 may not be limited to circular shapes but may be polygonal shapes such as triangles or quadrangles, and one of magnet sheet 10 and reflective sheet 15 may be in a circular shape and the other may be in a polygonal shape.

A coat layer with retroreflective coating may be provided to part of the surface of magnet sheet 10. Also, while magnet sheet 10 having a thickness of 1.5 mm is exemplarily described in the present embodiment, when a thicker magnet is adopted, a reflective layer by a reflective sheet, a coat layer with retroreflective coating, or the like may be provided to an outer peripheral side surface of the magnet.

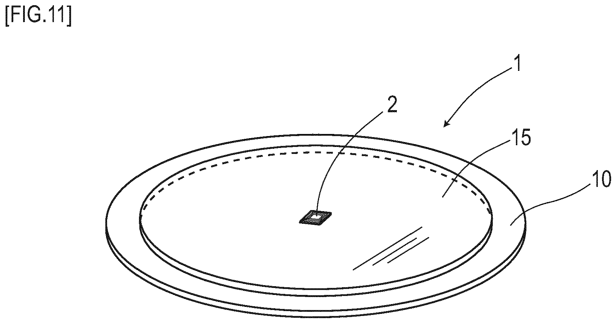

Magnetic marker 1 of FIG. 11 including RFID tag 2 readable by a tag reader (omitted in the drawing) may be adopted. According to RFID tag 2, it is possible to output, toward the vehicle, various information helpful in driving assists such as data about the laying positions of magnetic markers 1 and a speed limit. In magnetic marker 1 of the drawing, sheet-shaped RFID tag 2 is arranged on the surface of magnet sheet 10. In this magnetic marker 1, reflective sheet 15 forming a reflecting part is laminated on the surface of magnet sheet 10 where RFID tag 2 is arranged. This reflective sheet 15 functions also as a protective sheet for protecting RFID tag 2 arranged on the surface of magnet sheet 10.

In the present embodiment, light such as laser light is exemplarily described as electromagnetic waves, and lidar unit 62 is exemplarily described as a device which performs process of detecting magnetic marker 1. Magnetic marker 1 can be detected also by using electric waves (electromagnetic waves) such as millimeter waves. When magnetic marker 1 is detected by a millimeter-waves radar, a reflective sheet provided with ridge-shaped ribs extending in the vehicle-width direction may be adopted. Since electric waves such as millimeter waves have high rectilinearity, in the case of a reflective sheet with a flat surface, there is a possibility that millimeter waves cannot be sufficiently retroreflected. With a reflective sheet provided with ribs, the retroreflectivity of millimeter waves can be enhanced. Note that the ribs also effectively act to enhance the retroreflectivity of laser light. In place of the reflective sheet, ribs (reflective ribs) exhibiting retroreflective characteristics may be provided on the surface side of the magnet sheet. The ribs can be utilized as non-slip portions.

In the present embodiment, by laminating reflective sheet 15 on the surface of magnet sheet 10, the reflective layer formed on the outer surface side of magnet sheet 10 is exemplarily described as a reflecting part of magnetic marker 1. On the surface of magnet sheet 10, a protective sheet and a reflective sheet may be laminated, with the reflective sheet put on outside. In this case, strictly speaking, it cannot be said that the reflective layer is formed on the outer surface of magnet sheet 10. However, the reflective layer is formed on an outer surface side of magnet sheet 10.

### (Second Embodiment)

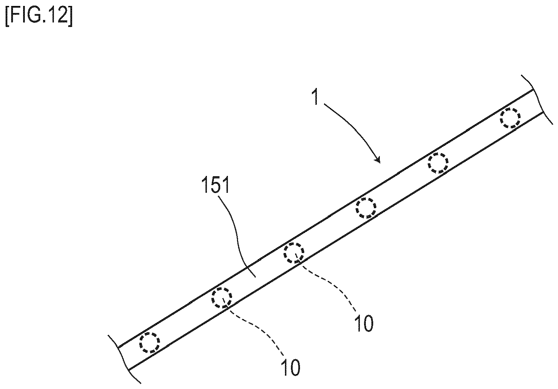

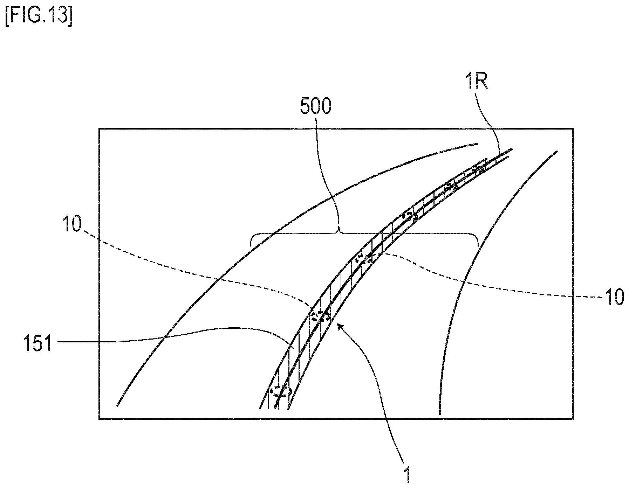

The present embodiment is an example in which, based on the magnetic marker of the first embodiment, the form is changed to a tape shape. Details of this are described with reference to FIG. 12 and FIG. 13.

Magnetic marker 1 (FIG. 12) of the present embodiment is a continuous-sheet-shaped (tape-shaped) magnetic marker where a plurality of magnet sheets 10 are arranged so as to be spaced on a back surface of continuous-sheet-shaped reflective tape 151 (back surface of a reflective surface) having a width of 150 mm. Continuous-sheet-shaped magnetic marker 1 is laid seamlessly along the center of lane 500 (refer to FIG. 13). Magnetic marker 1 is affixed to the road surface so that the reflective surface of reflective tape 151 is a top surface, and magnet sheets 10 are on a back side of reflective tape 151. Magnetic marker 1 is optically and magnetically detectable by a vehicle with the same specifications as those in the first embodiment.

In continuous-sheet-shaped magnetic marker 1, magnet sheets 10 are positioned with pitches of, for example, 2 meters. According to magnetic detection process, as with the first embodiment, magnet sheets 10 are detectable.

On the other hand, in continuous-sheet-shaped magnetic marker 1 of the present embodiment, reflective tape 151 is adopted as a tape (continuous sheet) which retains magnet sheets 10. Therefore, a result of optical detection process on magnetic marker 1 is different from that of the first embodiment.

When a lidar unit optically detects magnetic marker 1 of the present embodiment, magnetic marker 1 is continuously detectable as in a hatching area of FIG. 13. Based on a distance image by the lidar unit, a distance and azimuth to each position in the hatching area of the drawing can be acquired. On the vehicle side, a path passing through the hatching area can be set as target path 1R.

It is not an imperative configuration that the width of reflective tape 151 is a width exceeding the diameter of magnet sheets 10 as in the present embodiment. The reflective tape may have a width narrower than the diameter of magnet sheets 10.

Note that in place of the present embodiment, after magnet sheets 10 are laid so as to be spaced along the center of lane 500, a coat line with retroreflective coating may be formed along the center of lane 500 so as to pass through magnet sheets 10. As a width of this line, a width exceeding the diameter of magnet sheet 10 or a width narrower than the diameter of magnet sheet 10 may be adopted.

The present embodiment is an example of the magnetic marker with magnet sheets 10 arranged on the back surface of reflective tape 151. A protective tape or protective sheet for protecting magnet sheets 10 may be laminated to reflective tape 151. The protective sheet may be a small-piece-shaped sheet which covers magnet sheet 10. Protective tape may be a continuous tape similar to the reflective tape. Magnet sheet 10 may be arranged on the reflective surface of reflective tape 151. In this case, an area which does not reflect electromagnetic waves of laser light can be identified as the laying position of magnet sheet 10.

Note that other configurations and operations and effects are similar to those of the first embodiment.

### (Third Embodiment)

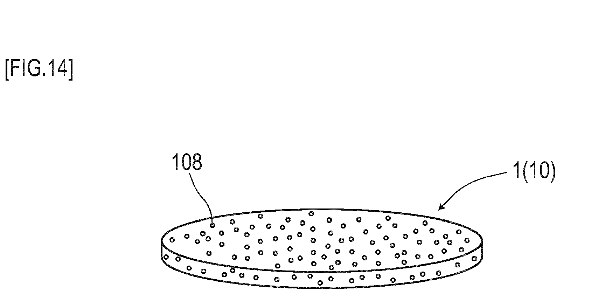

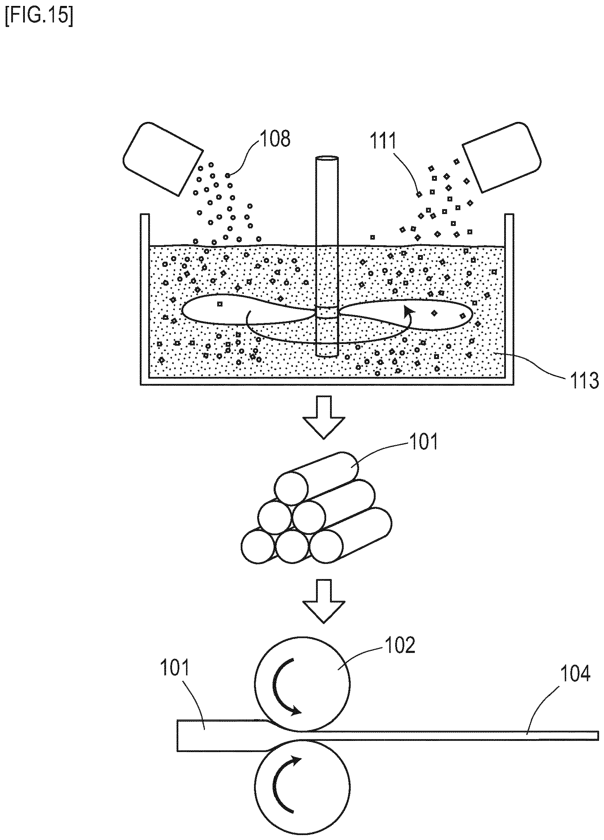

The present embodiment is an example in which, based on the magnetic marker of the first embodiment, the mode of the reflecting part is changed. Details of this are described with reference to FIG. 14 and FIG. 15.

Magnetic marker 1 of the present embodiment is magnet sheet 10 itself, and does not include the reflective sheet exemplarily described in the first embodiment. In magnetic marker 1 of the present embodiment, spherical glass beads 108 having a diameter of several tens of µm to 100 µm and a high refractive index and forming a reflecting part are dispersed and arranged inside magnet sheet 10, and part of spherical glass beads 108 are exposed to the outer surface of magnetic marker 1.

Next, to clarify the configuration of magnetic marker 1 of the present embodiment, a method of fabricating magnetic marker 1 is described with reference to FIG. 15.

Magnetic marker 1 is made by punching from large-sheet-shaped magnetic sheet 104. To fabricate this magnetic sheet 104, first, slurry 113 is generated, in which magnetic powder 111 (pulverulent body , powder of iron oxide as a magnetic material in the present embodiment) and spherical glass beads 108 are blended into a resin material as a base material in a molten state. Then, this slurry 113 is molded into a predetermined shape and dried, and pellet 101 is acquired. Magnetic sheet 104 is acquired by thinly drawing out pellet 101 into a sheet shape by volling roller 102. A process may be performed in which the surface of magnetic sheet 104 is melted by using a solvent such as thinner so that many spherical glass beads 108 are exposed to the outer surface.

Spherical glass beads 108 in the present embodiment are one example of particles forming a reflecting part. In place of spherical glass beads 108, a magnetic marker (magnet sheet) containing metal powder (pulverulent body) such as alumina as one example of the reflecting part may be used.

Note that other configurations and operations and effects are similar to those of the first embodiment.

### (Fourth Embodiment)

The present embodiment is an example regarding a method of detecting and using the magnetic marker of the first embodiment. Details of this are described with reference to FIG. 3, FIG. 9, FIG. 16, and FIG. 17.

The present embodiment is an example in which the determination details by control unit 61 at step S307 in FIG 9 are changed to a determination as to whether time is a predetermined time (for example, one second) before predicted arrival time point to. Furthermore, in the present embodiment, as for the determination at step S309, for example, a temporal limitation is combined, such as after a lapse of a predetermined time (for example, one second) from predicted arrival time point to. Note that the lengths of predetermined times before and after predicted arrival time point to may be equally set or different times may be set.

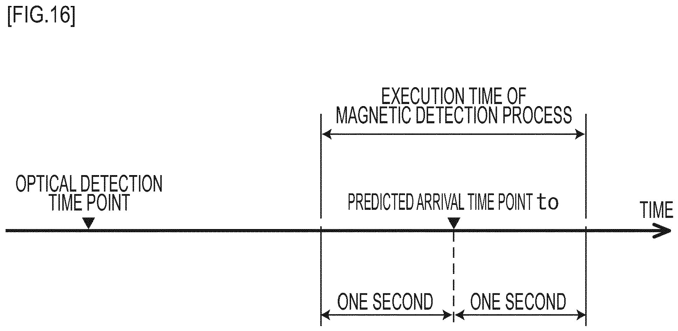

In the case of the present embodiment, as in FIG. 16, with reference to predicted arrival time point to, the execution period of the magnetic detection process can be set. If a temporal period with reference to predicted arrival time point to is set and the magnetic detection process is performed in that temporal period, at the timing when vehicle 5 (sensor array 51) arrives at magnetic marker 1, that magnetic marker 1 can be efficiently detected. A situation can be avoided in which the magnetic detection process is repeated to waste although vehicle 5 does not arrive at magnetic marker 1, and erroneous detection can be reduced.

Note that as a predetermined time, in place of the predetermined temporal period such as one second or 0.5 seconds, a time required for a vehicle to pass through a predetermined distance may be set. For example, when 0.5 meters is set as the predetermined distance, the predetermined time is a time obtained by dividing 0.5 meters by vehicle speed V.

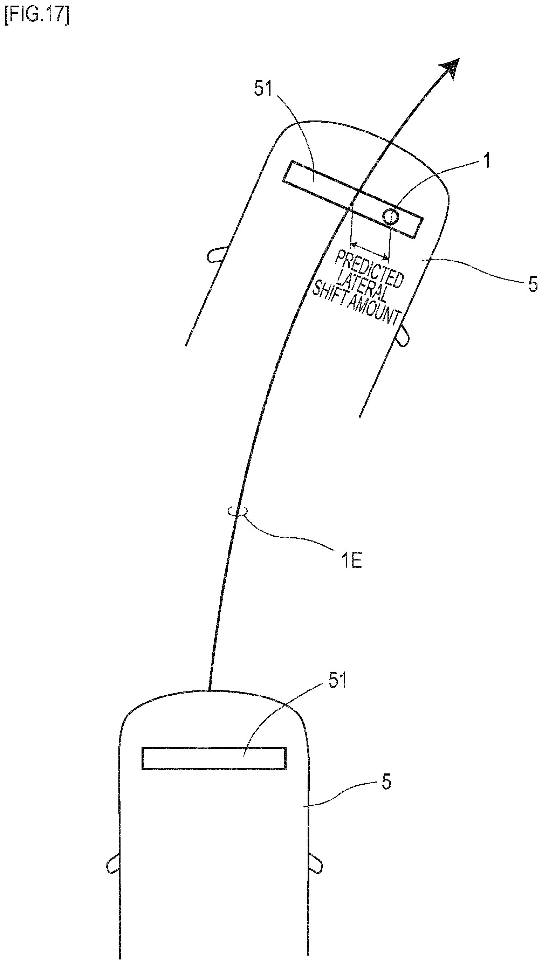

Also, when estimating predicted arrival time point to at step S305 of FIG. 9, control unit 61 as one example of the processing circuit also estimates a predicted lateral shift amount, which is a lateral shift amount when vehicle 5 arrives at corresponding magnetic marker 1. Specifically, control unit 61 estimates traveling path 1E (FIG. 17) when vehicle 5 is controlled with a target steering angle at step S304, thereby estimating the predicted lateral shift amount of vehicle 5 with respect to magnetic marker 1. Control unit 61 compares an actual lateral shift amount (actual deviation) identified when sensor array 51 magnetically detects that magnetic marker 1 and the predicted lateral amount. Then, control unit 61 determines as erroneous detection when a difference (differential lateral shift amount) between the actual lateral shift amount (actual deviation) and the predicted lateral shift amount exceeds a threshold value, thereby improving magnetic marker detection accuracy (accuracy improvement process).

Note that the process at step S307 in FIG. 9 may be omitted. In this case, when it is determined at step S309 that a magnetic marker has been detected, it is preferable to compare an actual detection time point and the predicted arrival time point. Control unit 61 preferably determines as erroneous detection when a time difference (difference) between the actual detection time point and the predicted arrival time point exceeds a threshold value (accuracy improvement process). With determination as erroneous detection in this manner, magnetic marker detection accuracy can be improved.

Also, factors responsible for the differential lateral shift amount between the actual lateral shift amount of the vehicle and the predicted lateral shift amount with respect to magnetic marker 1 include an error in a measured azimuth of magnetic marker 1 by lidar unit 62, an error in a target steering angle applied to steering control, and so forth.

In lidar unit 62, an axis is set which serves as a reference when a direction of emitting laser light is identified. Lidar unit 62 identifies an azimuth relation between a forwarding axis indicating a rectilinear traveling direction of the vehicle and the axis of lidar unit 62, thereby allowing measurement of the azimuth of a magnetic marker as a subject. If the azimuth relation identified between the forwarding axis of the vehicle and the axis of lidar unit 62 has an error, an error occurs in the measured azimuth of the magnetic marker, and an error occurs in the target path set by control unit 61. If the target path as a control target has an error, the above-described differential lateral shift amount increases as a result of control by control unit 61. In this manner, the differential lateral shift amount is an amount which changes in conjunction with the azimuth error of the axis of lidar unit 62. By using this differential lateral shift amount, calibration of the axis of lidar unit 62 can be performed. If the axis of lidar unit 62 is calibrated, measurement accuracy by lidar unit 62 as one example of a distance-measurement device can be improved, and the differential lateral shift amount can be reduced (accuracy improvement process).

For example, details of the accuracy improvement process when there is an error in which the axis of lidar unit 62 swings to the right of a correct direction are described. Note that in the following description, an angle on a right side with reference to a forwarding direction of the vehicle is taken as positive, an angle on a left side is taken as negative, a lateral shift to a right side is taken as positive, and a lateral shift to a left side is taken as negative. Also, an indication of left or right in parentheses in the description indicates that left or right is switched.

When the axis of lidar unit 62 swings to the right (left) of the correct direction, an azimuth measured by lidar unit 62 for the magnetic marker as a subject is leftward (rightward) with respect to the actual azimuth. Thus, the target path becomes leftward (rightward), and the actual traveling path of the vehicle by steering control becomes leftward (rightward), thereby increasing a possibility that the differential lateral shift amount obtained by subtracting the predicted lateral shift amount from the actual lateral shift amount has a negative value (positive value) . In this case, a negative (positive) angle obtained by multiplying the differential lateral shift amount of the negative value (positive value) by a conversion coefficient is preferably added to the azimuth of the axis of lidar unit 62 to calibrate the axis of lidar unit 62. With this addition of the negative (positive) angle in this manner, calibration can be performed in which the axis of lidar unit 62 swinging to the right side (left side) is returned to the left side (right side). Note that the coefficient by which the differential lateral shift amount is multiplied is preferably set as appropriate.

Also, in general, an error regarding the attachment of the wheels including the wheel to be steered is inevitable in the vehicle. In vehicle maintenance, the values of wheel alignment such as camber, toe-in, toe-out, and caster are adjusted so as to fall within a range of allowable errors. Since wheel alignment has an error, the vehicle does not necessarily travel rectilinearly when a rudder angle of the wheel to be steered (steering angle) is zero degree. That is, a neutral point of the steering angle corresponding to rectilinear traveling of the vehicle does not necessarily have zero degree.

At step S304 in FIG. 9, to calculate a target steering angle with respect to the target path with high accuracy, it is important that the neutral point of the steering angle corresponding to rectilinear traveling is identified with high accuracy. If the neutral point of the steering angle has an error, the accuracy of the target steering angle calculated by control unit 61 to let the vehicle travel along the target path is degraded. If the target steering angle is correctly calculated but the neutral point of the steering angle has an error, the path the vehicle actually travels by control by control unit 61 is shifted from the target path, thereby degrading following accuracy with respect to the target path. And, if the accuracy of the target steering angle is insufficient or if the following accuracy with respect to the target path is insufficient, the above-described differential lateral shift amount increases. In this manner, this differential lateral shift amount is an amount that changes in conjunction with the error of the neutral point of the steering angle. By using this differential lateral shift amount, the axis of the neutral point of the steering angle can be calibrated. With calibration of the neutral point of the steering angle, the accuracy of the target steering angle calculated by control unit 61 or the following accuracy of the vehicle with respect to the target path can be improved, thereby allowing reduction in the differential lateral shift amount (accuracy improvement process).

For example, the neutral point of the steering angle swings to the right side (left side) of the correct neutral point, the path of the vehicle by steering control goes rightward (leftward), and the possibility that the differential lateral shift amount obtained by subtracting the predicted lateral shift amount from the actual lateral shift amount has a positive value (negative value) increases. In this case, the neutral point is preferably calibrated by subtracting the positive (negative) angle obtained by multiplying the differential lateral shift amount of the positive value (negative value) by a conversion coefficient from the neutral point of the steering angle. With subtraction of the positive (negative) angle in this manner, calibration can be performed in which the neutral point swinging to the right side (left side) is returned leftward (rightward).

Note that other configurations and operations and effects are similar to those of the first embodiment.

In the foregoing, specific examples of the present invention are described in detail as in the embodiments, these specific examples merely disclose examples of technology included in the scope of the claims. Needless to say, the scope of the claims should not be restrictively construed based on the configuration, numerical values, and so forth of the specific examples. The scope of the claims includes technologies acquired by variously modifying, changing, or combining as appropriate the above-described specific examples by using known technologies, knowledge of a person skilled in the art, and so forth.

### REFERENCE SIGNS LIST

- 1: magnetic marker
- 10: magnet sheet (magnet)
- 108: spherical glass bead (reflecting part)
- 15: reflective sheet (reflecting part, reflective layer)
- 151: reflective tape (reflecting part, reflective layer)
- 2: RFID tag
- 5: vehicle
- 500: lane
- 51: sensor array (magnetic device)
- Cn: magnetic sensor (n is a natural number of 1 to 15)
- 510: detection processing circuit
- 61: control unit (processing circuit)
- 62: lidar unit (distance-measuring device)
- 65: steering unit
- 66: engine control unit

## Claims

1. A magnetic marker to be laid in or on a traveling road where a vehicle travels, the magnetic marker comprising:
a magnet as a magnetism generation source and a reflecting part which retroreflects at least part of incident electromagnetic waves.

2. The magnetic marker in claim 1, wherein the reflecting part is a reflective layer formed on an outer surface side of the magnet.

3. The magnetic marker in claim 2, wherein the reflective layer is a layer formed of a continuous-sheet-shaped tape, and the magnets are retained by the tape so as to be spaced.

4. The magnetic marker in claim 2, wherein the reflective layer is a layer formed of a small-piece-shaped sheet body.

5. The magnetic marker in claim 1, wherein the magnet is a magnet with pulverulent body made of a magnetic material dispersed in a base material, in which pulverulent body or particles forming the reflecting part are dispersed in the base material and part of the pulverulent body or particles forming the reflecting part are exposed to an outer surface of the magnet.

6. A method of detecting and using, by a traveling vehicle, a magnetic marker including a magnet as a magnetism generation source and a reflecting part which retroreflects at least part of incident electromagnetic waves and laid in or on a traveling road of the vehicle, wherein
the vehicle includes a distance-measurement device which acquires an azimuth and a distance of a subject based on a direction of emitting the electromagnetic waves and a time required for reflection of the electromagnetic waves, a magnetic device which detects the magnetic marker and identifies a lateral shift amount of the vehicle with respect to the magnetic marker, and a processing circuit which calculates a target steering angle for the vehicle to travel along a target path and controls the vehicle so that the vehicle travels along the target path,
the method comprises:
a process of detecting the magnetic marker by emitting the electromagnetic waves ahead of the vehicle, and measuring an azimuth and a distance of the magnetic marker;
a process of estimating a predicted arrival time point when the vehicle arrives at the magnetic marker detected by using the electromagnetic waves or a predicted lateral shift amount, which is a deviation (lateral shift amount) of the vehicle in a vehicle-width direction predicted for the magnetic marker; and
a process of identifying an actual detection time point, which is a time point when the magnetic marker is actually detected, or an actual deviation (lateral shift amount) of the vehicle with respect to the magnetic marker, and
the method performs an accuracy improvement process in which, of a result of comparison between the actual detection time point and the predicted arrival time point and a result of comparison between the actual deviation (lateral shift amount) and the predicted lateral shift amount, at least either one of the results is used to achieve an improvement in at least any of: measurement accuracy by the distance-measurement device, accuracy of detection of the magnetic marker by the magnetic device, accuracy of the target steering angle calculated by the processing circuit, and following accuracy of the vehicle with respect to the target path.

7. The method of using the magnetic marker in claim 6, wherein the accuracy improvement process includes a process of achieving the improvement in the accuracy of detection of the magnetic marker by determining that an erroneous detection of the magnetic marker has occurred when, of a difference between the actual detection time point and the predicted arrival time point and a difference between the actual deviation (lateral shift amount) and the predicted lateral shift amount, at least either one of the differences is larger than a threshold value.

8. The method of using the magnetic marker in claim 6 or 7, wherein the accuracy improvement process includes a process of achieving the improvement in the measurement accuracy by the measurement-distance device by calibrating an axis serving as a reference for identifying the direction of emitting the electromagnetic waves by the distance-measurement device.

9. The method of using the magnetic marker in any one of claims 6 to 8, wherein the accuracy improvement process includes a process of achieving the improvement in the accuracy of the target steering angle calculated by the processing circuit or the following accuracy of the vehicle with respect to the target path by calibrating a neutral point of a steering angle corresponding to rectilinear traveling of the vehicle.
